Europäisches Patentamt

European Patent Office

Office européen des brevets

(19)

(11) Veröffentlichungsnummer: **0 217 343**
**B1**

(12) **EUROPÄISCHE PATENTSCHRIFT**

(45) Veröffentlichungstag der Patentschrift:
**24.05.89**

(51) Int. Cl.⁴: **F16L 59/16**

(21) Anmeldenummer: **86113378.3**

(22) Anmeldetag: **29.09.86**

(54) Verfahren und Einrichtung zur Herstellung eines temperaturisolierten Leitungsrohres.

(30) Priorität: **02.10.85 DE 3535151**

(43) Veröffentlichungstag der Anmeldung:
**08.04.87 Patentblatt 87/15**

(45) Bekanntmachung des Hinweises auf die Patenterteilung:
**24.05.89 Patentblatt 89/21**

(84) Benannte Vertragsstaaten:
**AT BE CH DE FR GB IT LI LU NL SE**

(56) Entgegenhaltungen:
**EP-A- 0 114 660**
**DE-A- 3 110 503**

(73) Patentinhaber: **Brandes, Bernd, Mühlengrund 4,
D-2325 Grebin(DE)**

(72) Erfinder: **Brandes, Bernd, Mühlengrund 4,
D-2325 Grebin(DE)**

(74) Vertreter: **Einsel, Robert, Dipl.-Ing.,
Petersburgstrasse 28, D-3100 Celle(DE)**

## Beschreibung

Die Erfindung betrifft ein Verfahren zur Herstellung eines temperaturisolierten Leitungsrohres gemäß dem Oberbegriff des Anspruchs 1 sowie eine Einrichtung für die Durchführung des Verfahrens und schließlich die Anwendung dieses Verfahrens.

Für die wärmeisolierte Übertragung flüssiger und gasförmiger Medien, z.B. für eine Fernheizung, sind Leitungsrohre bekannt, die aus einem das Medium führenden Innenrohr, einem das Innenrohr im Abstand umgebenden Außenrohr und einem zur Wärmeisolierung dienenden Schaumstoff in dem Ringraum zwischen Innenrohr und Außenrohr bestehen. Das Innenrohr ist dabei vorzugsweise aus Stahl, das Außenrohr ebenfalls aus Stahl oder Kunststoff, vorzugsweise Polyäthylen, hergestellt. Als Schaumstoff für die Wärmeisolierung wird vorzugsweise Polyurethan verwendet. Es kann sich auch um Kälteleitungen handeln. In südlichen Ländern (Beispiel Saudi-Arabien) sind häufig Fernkälteleitungen installiert, die oft nicht abgeschaltet werden dürfen.

Es ist bekannt (DE-A 3 110 503), bei einem Verfahren zur Herstellung einer Verbindungsstelle für wärmeisolierte Leitungsrohre über die Verbindungsstelle eine Muffe zu schieben und darüber einen abdichtenden Schrumpfschlauch anzuordnen. Um ein Aufblähen des Schrumpfschlauchs beim Aufschäumen eines eingefüllten Kunststoffs zu verhindern, sind Luftlöcher neben dem Schrumpfschlauch angeordnet, die nach dem Aushärten des Schaumstoffs abgedichtet werden.

Nach alter Form wurde in fast jeder Reparaturmuffe Kondensat am Rohr mit eingeschlossen. Die Folgen aus dieser Tatsache sind bisher nicht absehbar. Es kann sich bei der Rohrleitung auch um eine aktiv beheizte Leitung für reinen Medientransport handeln, beispielsweise eine Schwefelpipeline oder eine Ölpipeline wie die "Alaska-Pipeline" zum temperierten Rohstoff-Transport.

Bei derartigen Leitungen ist es auch bekannt, in den im Ringraum vorgesehenen Schaumstoff einen sogenannten Meldeleiter einzubetten, der als Feuchtigkeitsfühler ausgebildet ist und mit dem eine Leckage des Innenrohres geortet werden kann.

Derartige Leitungsrohre werden in bestimmten Längen von mehreren Metern hergestellt und dann vor Ort zu einer längeren Leitung, beispielsweise einer sogenannten Pipeline oder Fernheizleitung, zusammengesetzt. Zu diesem Zweck ragt jeweils am Ende eines derartigen Leitungsrohres das Innenrohr über die Stirnenden des Außenrohres und des Schaumstoffes hinaus, damit jeweils die Enden der Innenrohre von zwei Leitungsrohren miteinander verschweißt werden können. Dabei liegt also zunächst ein gewisser Bereich des Innenrohres von ca. 0,5 m frei, ist also nicht von dem Schaumstoff und auch nicht von dem Außenrohr umgeben.

Bei einer Reparatur, z.B. aufgrund einer Leckage, müssen ebenfalls an der Reparaturstelle das Außenrohr und der Schaumstoff vorübergehend entfernt werden, damit ein Zugriff zu dem defekten Innenrohr besteht.

In den genannten Fällen besteht somit die Aufgabe, nach dem Zusammenschweißen der Innenrohre von zwei Rohrleitungen oder nach einer erfolgten Reparatur den Ringraum wieder mit Schaumstoff aufzufüllen und das unterbrochene Außenrohr mit einer Muffe wieder hermetisch zu verschließen. Dabei ist es besonders wichtig, daß in dem Ringraum keine Restfeuchtigkeit verbleibt. Eine verbleibende Restfeuchtigkeit in dem Ringraum kann auf lange Sicht den Schaumstoff zerstören, insbesondere durch einen erhöhten Dampfdruck die Zellwände des Schaumstoffes beschädigen. Feuchtigkeit bewirkt außerdem eine Korrosion an Stahlrohren, kann zusammen mit dem Schaumstoff Salzsäure bilden und außerdem die Wärmeisolierwirkung des Schaumstoffes verschlechtern.

Es ist daher bekannt, an einer Verbindungsstelle oder Reparaturstelle, auch Nachisolierstelle genannt, aus dem Schaumstoff zwischen Innenrohr und Außenrohr nach optischem Eindruck alle feuchten Stellen auszukratzen, damit nach dem Verschluß und dem Ausschäumen des Leitungsrohres möglichst keine Restfeuchtigkeit verbleibt. Diese Lösung ist jedoch lohnintensiv und außerdem stark subjektiven Eindrücken unterworfen. In vielen Fällen ist es notwendig, das Außenrohr über einen größeren Bereich zu entfernen, um den Schaumstoff weiter in die Tiefe auskratzen zu können. Vielfach war eine Erweiterung des Muffenbereiches bis zu der doppelten Normalmuffenlänge erforderlich. Danach mußte der Schadensbereich mit einer doppelten Schutzmanschette wieder geschlossen werden. Wenn der Schadensbereich größer als die doppelte Muffenlänge war, mußte in vielen Fällen das Innenrohr einschließlich des Außenrohres komplett ausgetauscht werden, um die vollständige Entfernung der eingedrungenen Feuchtigkeit sicherstellen zu können. Diese Maßnahme führte zu erheblichen Erd-, Schweiß- und Nachisolationsarbeiten und entsprechenden Kosten.

Der Erfindung liegt die Aufgabe zugrunde, ein Verfahren zu schaffen, mit dem bei der Herstellung der Muffen, insbesondere bei Stoß- und Reparaturstellen, eine einwandfreie Ausschäumung des Ringraumes ohne großen manuellen Arbeitsaufwand und mit weitestgehender Vermeidung von Restfeuchtigkeit erreicht werden. Für dieses Verfahren ist auch eine Einrichtung zur Durchführung des Verfahrens zu schaffen.

Diese Aufgabe wird durch die im Anspruch 1 beschriebene Erfindung gelöst. Vorteilhafte Weiterbildungen der Erfindung sind in den Unteransprüchen beschrieben.

Bei der erfindungsgemäßen Lösung wird also zunächst durch die Herstellung des Vakuums jegliche Feuchtigkeit aus dem Ringraum bei einer Stoßstelle oder Reparaturstelle beseitigt. Das beruht darauf, daß mit dem sinkenden Luftdruck die Restfeuchtigkeit selbsttätig verdampft und durch den Evakuierprozeß entfernt wird. Das gilt in vorteilhafter Weise auch für Restfeuchtigkeit, die sich an den Stirnenden des vorhandenen Schaumstoffes, des sogenannten Fabrikschaums, befindet. Es ist daher nicht mehr erforderlich, aus diesem sogenannten Fabrikschaum manuell alle feuchten Stellen auszukratzen. Der Ringraum, der dann anschließend mit dem Schäummittel unter Bildung des Schaumstoffes wieder ausgeschäumt wird, ist dann bereits beim Ausschäumen weitestgehend von Feuchtigkeit befreit. Es wurde bisher davon ausgegangen, daß der Schaum durch Vakuum zerstört wird und die Mantelrohre einbrechen müßten. Beide Punkte sind nicht so relevant wie befürchtet und sind beherrschbar durch gezielte Handhabung des Vakuums. Im Zusammenhang mit dem Ausschäumen der Verbindungsstelle kennen unzugängliche Spalten etc. mit isolierendem Gas aufgefüllt werden, wodurch die Isoliereigenschaften nochmals verbessert werden können.

Die früher negative Bedeutung betr. geschädigten Schaumbereich wegen der verminderten Isoliereigenschaften (Isoliergas wurde durch Luft ersetzt) entfällt weitgehend, da wieder mit Isoliergas aufgefüllt werden kann.

Die erfindungsgemäße Lösung erlaubt gegenüber der bisherigen Praxis eine einfache, kostensparende Montage oder Reparatur, ohne daß dabei Sicherheitseinbußen in Kauf genommen werden müssen. Bei Reparaturen müssen die geschädigten Bereiche nicht mehr über größere Längen geöffnet werden, um feuchten Schaumstoff oder vermutete Feuchtigkeit zu entfernen, da diese Aufgabe von dem Vakuum selbst übernommen wird. Das Vakuum ist in der Lage, durch Ritzen und Fugen hindurch die Restfeuchtigkeit zum Ausgasen zu bringen. Die dadurch erzielten Einsparungen bei dem Aufwand für Tiefbau und Material können in der Größenordnung von 50 % der bisherigen Aufwendungen liegen.

Während bei der bisher üblichen Reparaturpraxis häufig ein Unsicherheitsfaktor verblieb, der eine Gesamtsanierung der Rohrleitung sinnvoller sein ließ, können mit dem erfindungsgemäßen Verfahren Rohrabschlüsse nach erfolgter Verbindung oder Reparatur mit weniger Arbeitsaufwand und größerer Sicherheit hinsichtlich der Beständigkeit hergestellt werden. Das erfindungsgemäße Verfahren ermöglicht für derartige Fälle im Verhältnis zu den Gesamtkosten einer Neuinstallation eine Einsparung von annähernd 90 % der bisher üblichen Aufwendungen.

Die Evakuierung des Ringraumes erfolgt vorzugsweise in einem sogenannten pulsierenden Betrieb, indem mehrmals nacheinander durch einen Pumpvorgang über einen längeren Zeitraum das Vakuum hergestellt und danach durch erneute Luftzufuhr wieder abgebaut wird. Dadurch kann der Abbau der Restfeuchtigkeit verbessert werden. Vorzugsweise wird dabei jeweils nach erfolgter Evakuierung erneut Luft vorgewärmt und mit niedriger Luftfeuchtigkeit zugeführt, die in der Lage ist, zusätzliche Feuchtigkeit aufzunehmen.

Bei dieser Lösung kann nach der Evakuierung die Gasmenge zur Beseitigung des Vakuums gemessen und für die Ermittlung der optimalen Volumenmenge für das Schäummittel dienen. Das Gasvolumen wird dabei z.B. aus einem Behälter, der von einem meßtechnisch definierbaren Körper umschlossen wird, aufgefüllt. Aus der Verringerung des Volumens des Gasbehälters kann dann direkt auf das Volumen in dem Ringraum in dem Bereich der Muffe und damit auf den Bedarf an Schäummittel geschlossen werden. Die gleiche Messung kann nach Wahl des Fachmannes z.B. auch mittels einer Gasmeßuhr vorgenommen werden. Dadurch wird erreicht, daß eine wirklich ausreichende, aber trotzdem nicht unnütz große Menge an Schäummittel oder Schaum-Rohstoff in den Ringraum eingebracht wird.

Um rationell arbeiten zu können, werden vorzugsweise mehrere Muffen über eine Vakuumverteilung gleichzeitig an die Vakuumpumpe angeschlossen und über Absperrhähne einzeln oder abschnittweise eingeschaltet oder abgeschaltet.

Der Anstieg des Luftdruckes in dem Ringraum in Abhängigkeit von der Zeit kann als Maß für die Güte der Feuchtigkeitsentfernung herangezogen werden. Dieser Luftdruck steigt in der Regel in Abhängigkeit von der Zeit durch geplatzte Blasen des Schaumstoffes langsam an, während dieser Anstieg aufgrund von Restfeuchtigkeit wesentlich schneller erfolgt. Der langsame Anstieg aufgrund geplatzter Blasen ist weniger nachteilig als der schnellere Druckanstieg durch Restfeuchtigkeit.

Bei einer Ausführungsform der Erfindung sind am zweiten Ende eines Düsenkopfes mehrere Anschlüsse für verschiedene Schäummittelkomponenten vorgesehen und je über ein Ventil mit dem ersten Ende verbunden. Am zweiten Ende des Düsenkopfes sind zwei Anschlüsse für Gasabsaugen zum Evakuieren und für Gaszufuhr zur Volumenmessung vorgesehen und wahlweise über einen Zweiwegehahn mit dem ersten Ende verbindbar. Bei einer konstruktiven Ausführungsform greift in ein Außengewinde des Ventil- und Düsenkopfes eine Überwurfmutter ein, die sich an der Außenwand des Außenrohres abstützt. Dabei wird ein konisches Teil des Düsenkopfes durch ein Ende eines Anschlußstutzens gebildet, auf dessen anderes Ende wahlweise der Ventil- und Düsenkopf oder eine Dichtungskappe luftdicht abschließend aufschraubbar sind. Die Verspannung des Düsenkopfes an dem Außenrohr kann mit einem Keil zwischen einem Tragring des Düsenkopfes und der Außenwandung des Außenrohres erfolgen. Der Keil besteht dabei aus einem Oberkeil und einem Unterkeil, die entgegengesetzte Neigungen haben und zusammen ein quaderförmiges Teil mit veränderbarer, über die Länge konstanter Dicke bilden.

Vorzugsweise greift der Düsenkopf am ersten Ende mit Gewinde in einen Konterzahnring ein, der in einer Bohrung des Außenrohres liegt und mit einer nach außen abgewinkelten Kante die Kante der Bohrung an der Innenwand des Außenrohres hintergreift. Dabei greift in ein Außengewinde des Düsenkopfes eine Überwurfmutter ein, die sich an der Außenwand des Außenrohres abstützt. Der genannte Zahnring ist an seiner an der Innenwandung des Außenrohres anliegenden Kante mit Zähnen versehen.

Bei einer Ausführungsform des erfindungsgemäßen Verfahrens werden am Leitungsrohr an dem dem evakuierten Füllraum abgewandten Ende Innenrohr und Außenrohr luftdicht mit einer Manschette, Muffe oder dgl. verbunden. Vorzugsweise werden das Außenrohr oder die Muffe von einer wärmeisolierenden Umhüllung umgeben, um Kondenswasser im Ringraum zu vermeiden. Das Verfahren kann auch für schaumisolierte Rohre verwendet werden, die handelsübliche rollenförmig geliefert werden, wobei die Anwendung sich dann über die gesamte Lieferlänge erstreckt.

Durch die erfindungsgemäße Lösung werden zusätzlich folgende Vorteile erzielt: Eine gesicherte Erfolgskontrolle und dadurch hohe Rentabilität. Die erfolge Reparatur kann gleich oder besser als die vorher bestehende Originalmuffe werden. Es wird eine zuverlässige Trocknung der Muffe erreicht, was bisher auch bei Neuanlagen nicht erreichbar war. Bisher war ein umständliches Auskratzen der Stirnseiten des Schaumstoffes möglich, wobei Problembereiche meist nicht erreicht wurden. Die erfindungsgemäß eingeführte Trocknung kann auch für derartige, schwer zugängliche Bereiche wirksam werden. Bei Neuanlagen besteht oft die Notwendigkeit, viele Muffen gleichzeitig in einem Zug auszuschäumen. Dabei konnte durch den Tag/Nacht-Zyklus Kondensat in den zur Schäumung vorbereiteten, ungeschäumten Innenraum gelangen. Die Schäden, die dadurch an den Muffen direkt oder an den integrierten Feuchtsensoren entstanden, werden durch die erfindungsgemäße Lösung verringert. Es sind faserisolierte oder Halbschalen-isolierte, rollenförmig gelieferte Rohrsysteme bekannt, deren Enden auch mit Kappen versehen sind, um vor Feuchtigkeit zu schützen. Bisher war es oft notwendig, bei Beschädigung durch Baufehler, Leckage oder späterer Ausgrabung eine größere Länge von 25 m bis 100 m zu wechseln. Mit dem erfindungsgemäßen Verfahren indessen ist eine sehr sorgfältige und behutsame Trocknung der einzelnen Muffenbereiche möglich.

Mehrere Ausführungsbeispiele der Erfindung werden im folgenden anhand der Zeichnung erläutert. Darin zeigen

Fig. 1 den grundsätzlichen Aufbau einer Stoßstelle,
Fig. 2 im Prinzip eine Einrichtung für die Evakuierung und Ausschäumung,
Fig. 3 eine konstruktive Ausbildung der Einrichtung nach Fig. 2,
Fig. 4,5 eine andere Ausbildung der Einrichtung nach Fig. 3,
Fig. 6 eine besondere Art der Verspannung der Einrichtung an dem Außenrohr,
Fig. 7 eine weitere Art der Verspannung der Einrichtung an dem Außenrohr,
Fig. 8,9 eine besondere konstruktive Ausbildung der Einrich tung nach Fig. 3,
Fig. 10 eine andere Art der Anbringung der Einrichtung gemäß Fig. 2 an dem Außenrohr,
Fig. 11 eine Einrichtung zur Ermittlung des Füllvolumens,
Fig. 12 den Anschluß einer Vielzahl von Rohrstellen an eine gemeinsame Vakuumpumpe,
Fig. 13 einen zusätzlichen Schutz gegen Belastung durch den Außendruck,
Fig. 14 eine spezielle Rohrleitung und
Fig. 15-17 verschiedene Aufbauten des Leitungsrohres.

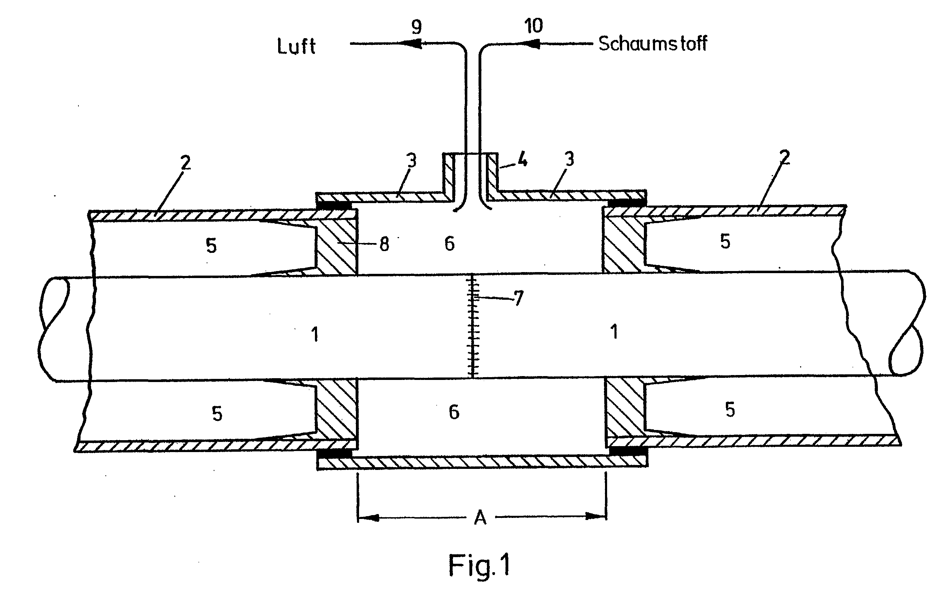

Fig. 1 zeigt ein Leitungsrohr mit dem Innenrohr 1, dem Außenrohr 2 und dem Schaumstoff 5 in dem durch die Rohre 1,2 gebildeten Ringraum. Die Innenrohre 1 von zwei zunächst getrennten Leitungsrohren sind durch eine Schweißnaht 7 miteinander verbunden. Damit diese Verbindung herstellbar ist, ragen die Innenrohre 1 über die Stirnenden der Außenrohre 2 und des Schaumstoffes 5 hinaus. Das bedeutet, daß in dem Bereich A der Schaumstoff 5 und das Außenrohr 2 zunächst nicht vorhanden sind. Dies kann auch der Fall sein, wenn es sich nicht um die Herstellung der Verbindung von zwei Innenrohren 1, sondern um die Reparatur des Innenrohres 1 nach einer Leckage handelt. Der Bereich A muß also nach erfolgter Verbindung der Innenrohre oder erfolgter Reparatur wieder durch den Schaumstoff 5 und das Außenrohr 2 komplettiert werden. Der schraffiert dargestellte Bereich 8 zeigt den Bereich des Schaumstoffes 5 an, der durch Feuchtigkeit beeinträchtigt ist und bei dem bekannten Verfahren entfernt werden müßte.

Das Außenrohr 2 ist von der Muffe 3 umgeben, die eine Füllöffnung 4 aufweist. Muffe 3 und Außenrohr 2 bilden dabei einen luftdichten Abschluß. Zunächst wird über die Leitung 9 die Luft aus dem Füllraum 6 abgesaugt, also in dem Füllraum 6 ein Vakuum hergestellt. Durch dieses Vakuum wird die Feuchtigkeit aus dem Füllraum 6 entfernt, ebenso aus dem Bereich 8. Das bisher benötigte Auskratzen des Bereiches 8 wegen Feuchtigkeit kann also mehr oder weniger entfallen. Durch den Evakuiervorgang über die Leitung 9 wird also zunächst der Füllraum 6 evakuiert und von jeglicher Restfeuchtigkeit befreit. In einem anschließenden Vorgang wird über die Leitung 10 das Schäummittel über die Füllöffnung 4 eingebracht, und zwar in einer solchen Menge, daß der Füllraum 6 einwandfrei mit Schaumstoff ausgefüllt wird. Es wird dann auch im Bereich 8 ein weitestgehend kontinuierlicher Übergang des Schaumstoffes 5 ohne nennenswerte Unregelmäßigkeiten erreicht. Die Menge des über die Leitung 10 einzubringenden Schäummaterials ist dabei vorzugsweise bestimmt durch das Gasvolumen, das nach einem Evakuieren des Füllraums 6 erforderlich ist, um in dem Füllraum 6 vom evakuierten Zustand aus wieder den normalen Luftdruck herzustellen. Nach den beiden Vorgängen, nämlich der Evakuierung und der Auffüllung des Füllraums 6, wird die Füllöffnung 4 gasdicht verschlossen.

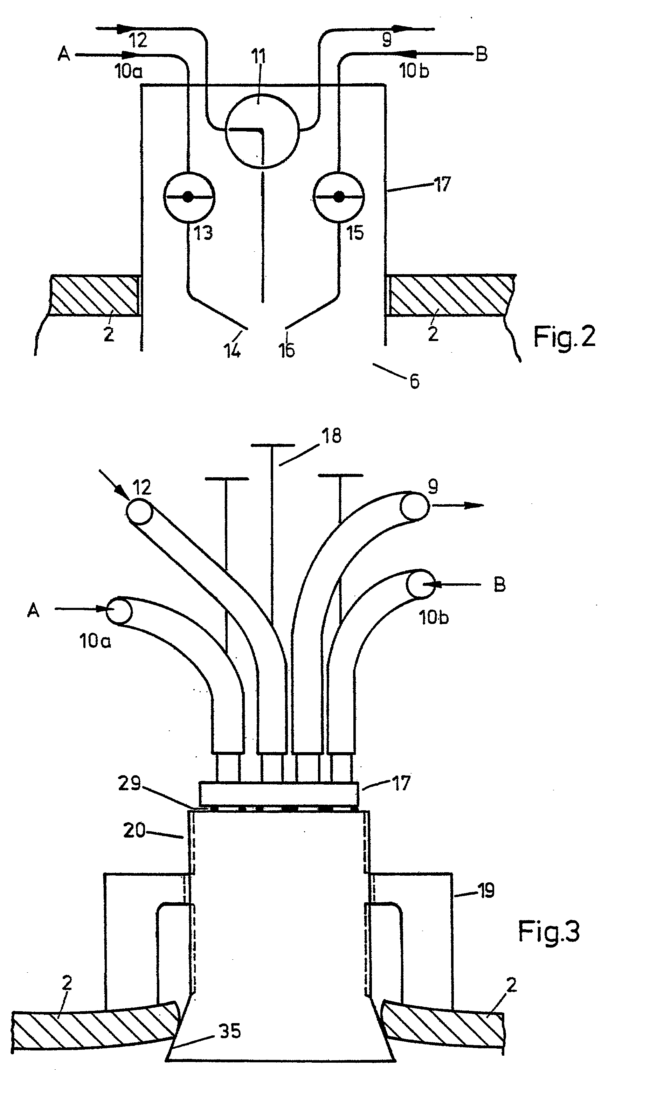

In Fig. 2 ist in das Außenrohr 2 ein die Füllöffnung 4 gemäß Fig. 1 bildender Ventil- und Düsenkopf 17 eingesetzt. Über die Leitung 10a, das Ventil 13 und die Düse 14 wird eine erste Schaumkomponente A und über die Leitung 10b, das Ventil 15 und die Düse 16 eine zweite Schaumkomponente B in den Füllraum 6 eingebracht. Das Verhältnis der beiden Schaumkomponenten kann durch die Düsen 14,16 oder auch durch die Ventile 13,15 bestimmt werden. Die beiden Komponenten A und B bilden zusammen in dem Füllraum 6 den Schaumstoff 5 gemäß Fig. 1.

Die Evakuierung erfolgt über die Leitung 9 und den Zweiwegehahn 11. In einem intermittierenden Betrieb wird abwechselnd über die Leitung 9 und den Zweiwegehahn 11 evakuiert und über die Leitung 12 und den Zweiwegehahn 11 wieder erneute Luft bis auf Normaldruck im Füllraum 6 zugeführt.

Fig. 3 zeigt eine konstruktive Ausbildung für die luftdichte Anordnung des Ventil- und Düsenkopfes 17 an dem Rohr 2. Der gesamte Ventil- und Düsenkopf 17 gemäß Fig. 1 enthält einen Anschlußstutzen 20 mit dem konischen Teil 35. Der Anschlußstutzen 20 wird von Innen in eine Bohrung des Außenrohres 2 bzw. der das Außenrohr 2 bildenden Muffe 3 hindurchgesteckt und mit der Überwurfmutter 19 an dem Außenrohr 2 verspannt. Das zylinderförmige konische Teil 35 verklemmt sich dadurch in der Bohrung des Außenrohres 2, angezogen durch die Überwurfmutter 19, und bewirkt dadurch einen luftdichten Abschluß ohne zusätzliche Dichtungsmittel. Zwischen dem Kopf 17 und dem Anschlußstutzen 20 sind O-Ringe 29 vorgesehen, die die den Leitungen 9,10,12 zugeordneten Kanäle abdichten. Zusätzlich sind Ventilhebel 18 zur manuellen Betätigung der Ventile 13,15 und des Zweiwegehahns 11 gemäß Fig. 2 vorgesehen.

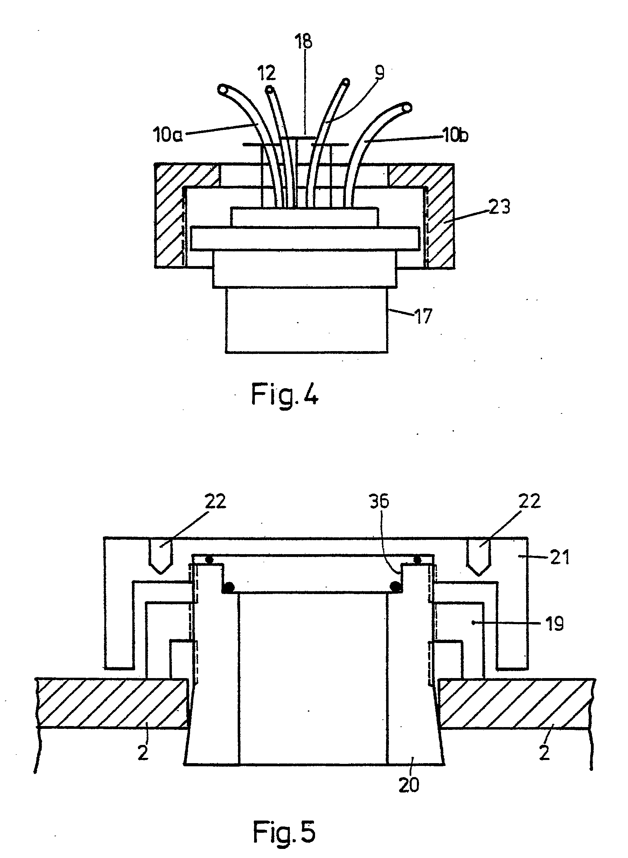

In Fig. 4,5 ist der Anschlußstutzen 20 durch die Überwurfmutter 19 wie in Fig. 3 an dem Außenrohr 2 verspannt. Der Anschlußstutzen 20 ist zunächst durch die Dichtungskappe 21 verschlossen, die auf das obere Ende des Anschlußstutzens 20 aufgeschraubt ist und mittels einer Dichtung einen luftdichten Abschluß bildet. An der Oberseite ist die Kappe 21 mit einer Werkzeugaufnahme 22 versehen. Für den Evakuier- und Ausschäumvorgang wird die Kappe 21 von dem Anschlußstutzen 20 abgeschraubt und durch den Ventil- und Düsenkopf 17 gemäß Fig. 4 ersetzt. Der untere Teil des Kopfes 17 greift dabei in die Hinterdrehung 36 ein und bildet mit dem Anschlußstutzen 20 nach dem Anziehen der Überwurfmutter 23, die mit dem Außengewinde des Anschlußstutzens 20 zusammenwirkt, mit einer Dichtung einen luftdichten Abschluß. Nach dem Evakuier- und Ausschäumvorgang wird der Kopf 17 wieder abgenommen und der Anschlußstutzen 20 durch Anziehen der Überwurfmutter 19 ganz durch das Außenrohr 2 hindurchgezogen. Sofort anschließend wird die im Außenrohr 2 verbleibende Füllöffnung gasdicht verschlossen (z.B. durch Spiegelschweißung).

Durch die Aufteilung des gesamten Ventil- und Düsenkopfes 17 gemäß Fig. 2 in den in Fig. 4 dargestellten eigentlichen Düsenkopf 17 und den Anschlußstutzen 20 wird folgender Vorteil erreicht. Der Düsenkopf 17 ist durch die die Leitungen bildenden Schläuche bei der Montage hinderlich. Nach der Montage der Muffe 3 kann nicht immer sofort mit der Evakuierung begonnen werden, andererseits muß die Füllöffnung 4 gemäß Fig. 1 verschlossen werden. Bei der Montage der Muffe 3 wird der Anschlußstutzen 20 sofort eingesetzt und zunächst mit der Kappe 21 verschlossen. Danach wird zur Fertigstellung der Muffe die Kappe 21 entfernt und durch den Düsenkopf 17 ersetzt und dann mit der Überwurfmutter 23 angezogen. Die Kappe 21 ist so ausgebildet, daß sie über die Werkzeugaufnahme 22 nur mit einem Werkzeug abgenommen werden kann und zusätzlich auch die Überwurfmutter 19 überdeckt, um sie gegen Zerstörung zu schützen und durch den Glockeneffekt den Stutzen trocken zu halten. Durch diese Lösung werden ein kleines Baustellenrisiko, ein geringer Investitionsaufwand und eine einfache Handhabung erreicht, da die Anschlußschläuche nicht demontiert werden müssen, sondern zusammen mit dem Düsenkopf 17 gemäß Fig. 4 von der Rohrleitung abgenommen werden können.

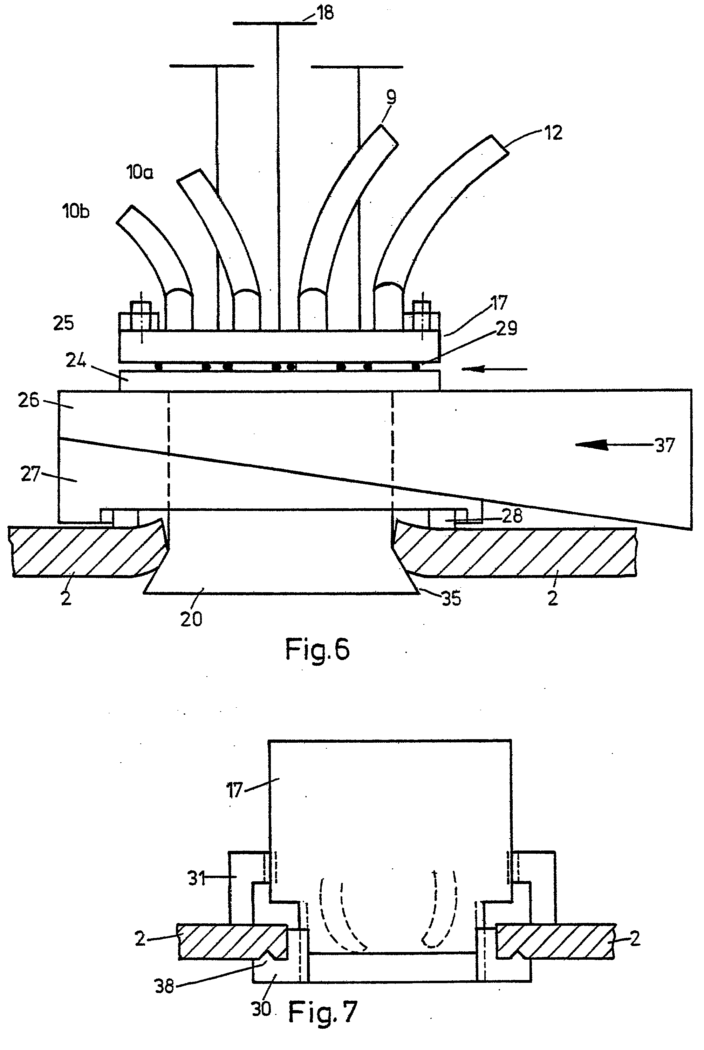

In Fig. 6 erfolgt die Verspannung des Anschlußstutzens 20 an dem Außenrohr 2 nicht durch eine Spannmutter, sondern durch einen Keil aus dem Unterkeil 27 und dem Oberkeil 26 zwischen dem Tragring 24 am Düsenkopf 17 und der Außenwand des Außenrohres 2. Der Unterkeil 27 liegt dabei über dem Druckring 28 auf der Außenwand des Außenrohres 2 auf. Durch Hereintreiben des Oberkeiles 26 in Richtung 37 wird der Anschlußstutzen 20 radial nach außen gedrückt und verklemmt sich dadurch in der Bohrung des Außenrohres 2.

In Fig. 7 erfolgt die Verspannung des Kopfes 17 an dem Außenrohr 2 mit dem sogenannten Konter-Zahnring 30 und der Spannmutter 31. Die Spannmutter 31, die mit ihrem Innengewinde in ein Außengewinde des Kopfes 17 eingreift, wird angezogen und zieht den Kopf 17 radial nach außen. Dadurch wird der Zahnring 30, der mit seinem Innengewinde in ein Außengewinde des Kopfes 17 eingreift, gegen die Innenwandung des Außenrohres 2 gepreßt. Dabei verhindern Zähne 38 eine Verdrehung des Zahnringes 30 an dem Außenrohr 2. Der Zahnring 30 kann entweder im Rohr 2 verbleiben, oder er wird mittels eines Kreisschneiders, der im Zahnring zentriert werden kann, vor dem Verschließen des Mantels zurückgewonnen. Die Dichtung der einzelnen Gewinde und Auflageflächen kann mit O-Ringen erfolgen.

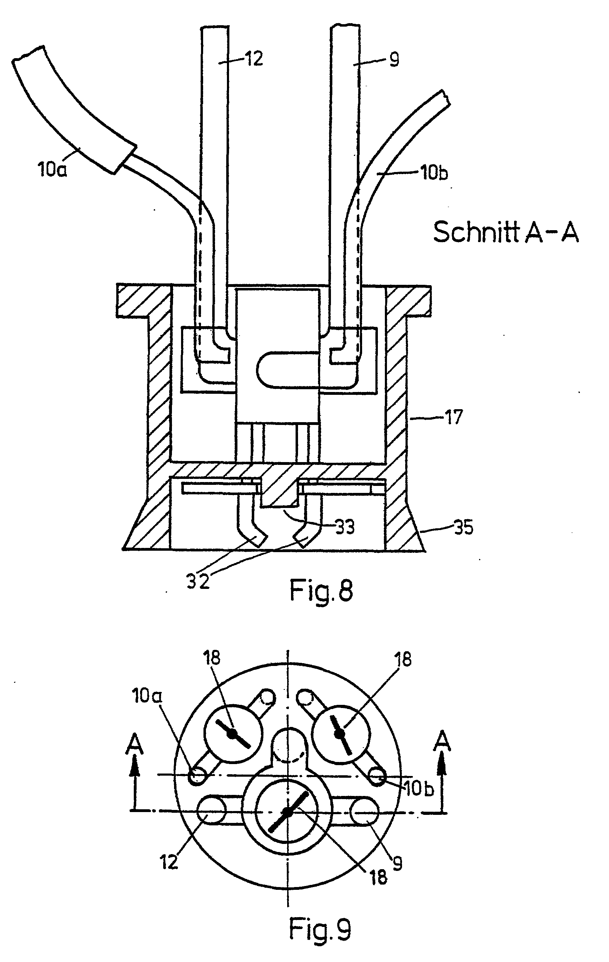

Fig. 8,9 zeigen in einer Draufsicht und einem Schnitt A-A eine konstruktive Ausbildung des Ventil- und Düsenkopfes 17, der durch den konischen Teil 35 in der beschriebenen Weise an dem Außenrohr 2 verspannbar ist. Zusätzlich sind dargestellt die Düsenkappe 32 als Verschmutzungsschutz und der Vakuumanschluß 33, der mit den Leitungen 9,12 über die einzelnen Ventile verbunden ist. Fig. 9 zeigt im wesentlichen die Ventilhebel 18 für die Ventile für die Leitungen 9,10,12.

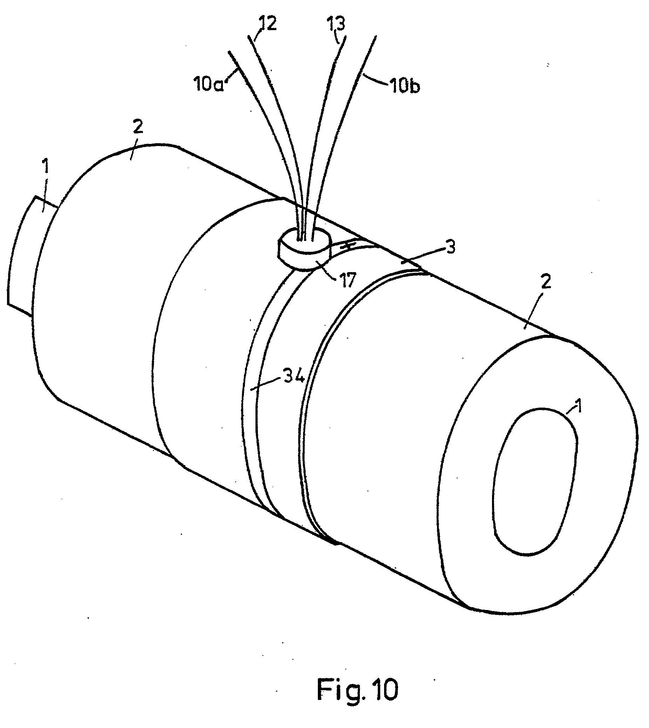

Fig. 10 zeigt eine andere Befestigung des Kopfes 17 an dem Außenrohr 2 bzw. der das Außenrohr bildenden Muffe 3. Der Kopf 17 ist mit der Schelle 34 verbunden, die in Form eines Spannbandes die Muffe 3 vollständig umgibt. Durch das mit bekannten Mitteln angezogene Spannband 34 wird der Kopf 17 zusammen mit entsprechenden Dichtungsringen auf die Oberfläche der Muffe 3 gepreßt und bildet dadurch einen luftdichten Abschluß.

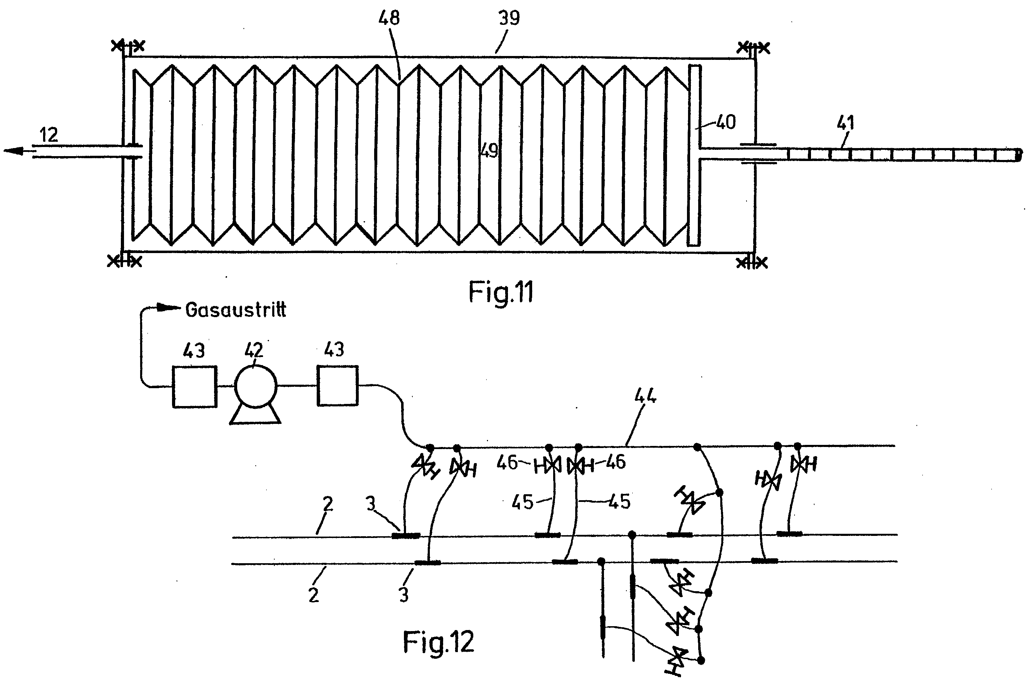

Fig. 11 zeigt eine Einrichtung zur Messung des optimalen Füllvolumens des Füllraumes 6 mit dem Schaumstoff. Das linke Ende des Zylinders 39 ist über die Leitung 12 und den Zweiwegehahn 11 mit dem evakuierten Füllraum 6 verbunden. Der Innenraum 49 ist durch den Balg 48 und den Schieber 40 luftdicht mit der Leitung 12 verbunden. Nach erfolgter Evakuierung über die Leitung 9 wird der Zweiwegehahn so betätigt, daß die Leitung 12 mit dem evakuierten Füllraum 6 verbunden ist. Dadurch dringt ein Luftvolumen in den Füllraum 6 ein und stellt darin wieder den atmosphärischen Luftdruck her. Durch diese Luftbewegung wird der Schieber 40 nach links bewegt und bewegt dadurch gleichermaßen den Meßstab 41 so weit nach links, bis der atmosphärische Druck in dem Füllraum 6 hergestellt ist. Das Maß der Bewegung ist ein Maß für das in den Füllraum 6 eingedrungene Luftvolumen und somit ein Maß dafür, welches Volumen an Schäummaterial in den Füllraum 6 eingebracht werden muß. Für eine gute Isolation ist eine optimale Schaumdichte entscheidend. Um eine wirklich ausreichende, aber trotzdem nicht unnütz hohe Menge Schaum-Rohstoff einzubringen, ist eine derartige Ermittlung des Luft-Rauminhalts des Füllraums 6 vorteilhaft. Bisher wurde diese Menge grob geschätzt und damit nicht optimiert. Bei Vakuum wäre auch eine Schätzung schwer möglich, da der Füllraum 6 nicht zuverlässig sichtbar ist.

Fig. 12 zeigt ein Ausführungsbeispiel für den Fall, daß über ein längeres Leitungsrohr eine Vielzahl von Muffen 3, z.B. an Verbindungsstellen oder Reparaturstellen, vorgesehen ist. Dabei sind alle Muffen 3 in der beschriebenen Weise über Muffen-Anschlußleitungen und Absperrorgane 46 mit einer gemeinsamen Vakuum-Sammelleitung 44 verbunden, die an die Vakuumpumpe 42 zwecks Evakuierung angeschlossen ist. Der Vakuumpumpe 42 sind zwei Analysatorstufen 43 zugeordnet, die zur Erkennung des Frigen-Feuchteanteils durch elektronische Feuchteerkennung über Sensoren und Frigenerkennung über Frequenzänderungen als Folge des geänderten Dielektrikums im Schwingkreis dienen. Dadurch wird definiert, wie das Verhältnis zwischen entfernter Feuchte und zerstörten Schaumporen ist. Das technisch und wirtschaftliche Optimum kann damit unabhängig von der Güte des vorhandenen Fabrikschaums, das ist der Schaumstoff in den vorgefertigten isolierten Rohren, individuell bestimmt werden. Diese Analysatorstufen 43 können nach freiem Ermessen des Fachmanns vor oder hinter der Vakuumpumpe 42 angeordnet sein.

Es ist möglich, eine das Zerstäuben im Vakuum begünstigende Chemikalie, die an der Reaktion selbst nicht teilnimmt und spätestens während der Zerstäubung zu Gas wird, in den Füllraum 6 einzubringen, so daß eine feinere Verteilung bzw. Vermischung erreicht wird. Als Gas bietet sich hier Frigen an, da es auch die Wärmedämmeigenschaften in zerstörten Zellen wieder herstellt. In für den neuen Schaum unzugänglich tiefen Spalten und Hohlräumen verbessert Frigen die Wärmedämmeigenschaften wieder in gleicher Art wie der Schaum. Um entsprechend dem Arbeitsfortschritt die Leitung 44 verlegen zu kÖnnen, sind mindestens am Beginn einer jeden Anschlußleitung 45 Absperrorgane 46 vorgesehen, um die Vakuumverluste begrenzt zu halten.

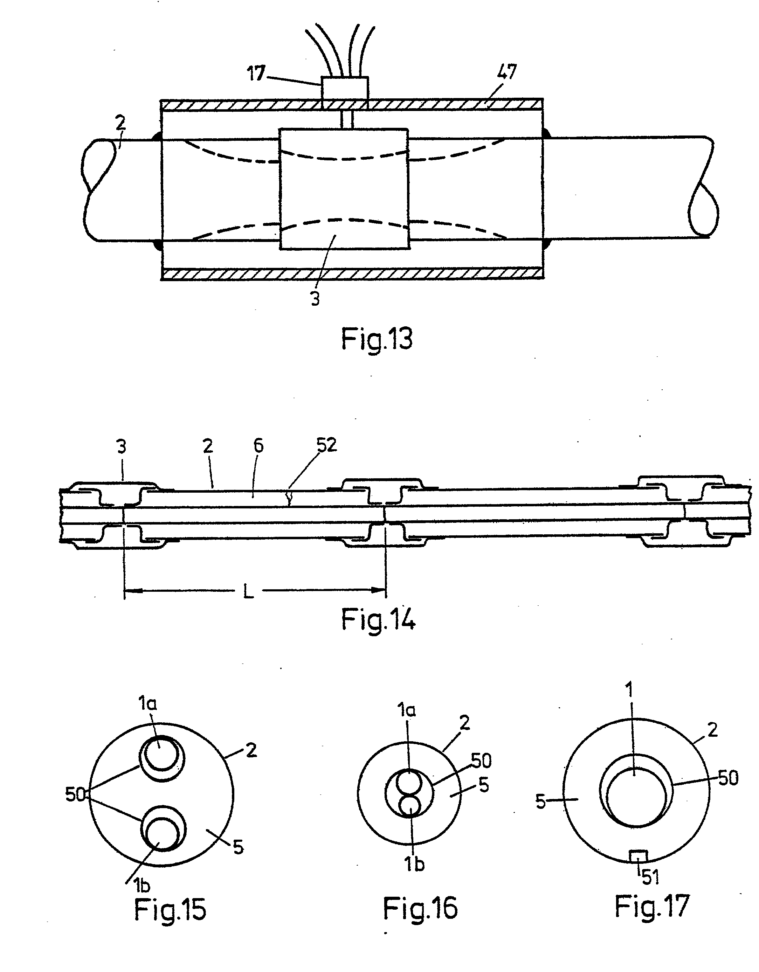

Fig. 13 zeigt ein Ausführungsbeispiel für den Fall, daß die Muffe 3 durch das Vakuum und den von außen wirkenden Luftdruck beansprucht wird. Durch das Vakuum können die Muffe 3 und das Rohr 2 die gestrichelt angedeutete Einschnürung erfahren und den geschädigten Bereich dadurch schlechter evakuieren lassen. Um diese Belastung und Verformung zu vermeiden, ist das Außenrohr 2 im Bereich der Muffe 3 von einer stabilen, hülsenförmigen Kappe 47 umgeben, in die luftdicht der Ventilkopf 17 eingesetzt ist. Die Kappe 47 ist luftdicht mit dem Außenrohr 12 abgeschlossen. Die Zufuhr bzw. Entnahme der Luft oder das Einbringen des Schäummittels erfolgt durch die Muffe 3 hindurch, die nicht unbedingt luftdicht mit dem Außenrohr 2 abgeschlossen sein muß. Die stabile Kappe 47 verhindert dabei eine unerwünscht starke Belastung der Muffe 3 während der Evakuierung. Nach dem Einbringen des Schäummittels ist der Füllraum 6 ausgefüllt. Dann kann die Kappe 47 abgenommen werden, da dann der Luftdruck von außen eine Verformung nicht mehr bewirken kann.

Diese Lösung hat zusätzlich den Vorteil, daß das Außenrohr 2 nicht mehr unmittelbar mit der Außenluft in Berührung ist, sondern die Außentemperatur an der Kappe 47 ansteht. Dadurch kann verhindert werden, daß Kondenswasser gleich außerhalb des Fernwärmerohres entsteht.

Das Außenrohr 2 kann durch die Außentemperatur insbesondere bei kalter Jahreszeit abgekühlt werden, so daß Wasser an der Innenseite des Rohres als Kondensat hängenbleiben kann. Dieses Wasser wäre schwer evakuierbar. Als Gegenmaßnahme kann das Außenrohr 2 im offenliegenden Bereich mit einer Wärmeschutzhülle versehen werden, die Kondensationsvorgänge verhindert und einen die Evakuierung begünstigenden Wärmestau ähnlich wie im Erdreich verursacht. Ein Vorteil besteht darin, daß die Evakuierung unterstützt wird. Die Umhüllung kann aus einer weichen Decke, z.B. aus Neoprenschaum bestehen, das z.B. als Material für Taucheranzüge verwendet wird.

Es kann zweckmäßig sein, an dem Leitungsrohr an dem dem evakuierten Füllraum abgewandten Ende Innenrohr und Außenrohr mit einer Manschette luftdicht zu verschließen. Dadurch wird verhindert, daß durch die Evakuierung des Füllraumes Luft durch den Fabrikschaum nachströmt und den Evakuierprozeß verzögert oder behindert.

Die Evakuierung erfolgt z.B. auf einen Minimaldruck von ca. 1 mBar. Für den Trocknungsprozeß ist ein möglichst niedriger Restdruck zweckmäßig, während andererseits mit sinkendem Restdruck die mechanische Beanspruchung des Außenrohres oder der Muffe durch das Vakuum erhöht wird. Es kann daher zweckmäßig sein, empirisch ggf. einen höheren Wert für den Restdruck zu ermitteln, der noch eine ausreichende Trocknung, aber keine unzulässig starke mechanische Beanspruchung von Außenrohr oder Muffe durch den äußeren Luftdruck und keine Zerstörung des Schaumstoffs bewirkt. Der Luftdruck kann auch angegeben werden in Torr = 1,33 mBar oder in Pascal = Pa, wobei 1 Pascal = 1 Newton/$m^2$ = N/$m^2$ ist. 1 Torr = 133,3 Pa.

Fig. 14 zeigt ein Beispiel, bei dem die gesamte Rohrleitung aus mehreren handelsüblich rollenförmig gelieferten Einzelteilen besteht, die jeweils durch Muffen zusammengesetzt sind. Bei einer solchen Rohrleitung erstreckt sich der Schadensbereich über die gesamte Lieferlänge L. Die Länge L entspricht also dem geschädigten Bereich 8 gemäß Fig. 1. Dabei wird mit dem erfindungsgemäßen Verfahren also das Leitungsrohr über die gesamte Länge L behandelt und nachisoliert. Die Schädigung des Füllraumes 6 ist durch die Schadensstelle 52 angedeutet.

Das Leitungsrohr kann auch ein rollenförmig gefertigtes Rohr sein, bei dem das das Medium führende Innenrohr 1 lose in dem Schaumstoff gelagert ist. Die Fig. 15, 16, 17 zeigen verschiedene Abwandlungen im Aufbau des Leitungsrohres. In Fig. 15 sind innerhalb des Außenrohres 2 zwei Innenrohre 1a und 1b jeweils in einem Stützrohr 50 gelagert, wobei sich zwischen den Stützrohren 50 und dem Außenrohr 2 wieder der Schaumstoff 5 befindet.

In Fig. 16 befinden sich innerhalb des Stützrohres 50 zwei Innenrohre 1a und 1b.

In Fig. 17 ist in einem Stützrohr 50 ein Innenrohr 1 gelagert. Dabei ist am unteren Ende des Außenrohres 2 eine Ablaufrinne 51 vorgesehen, die zum Ablauf von Wasser dient, das in dem Raum zwischen Außenrohr 2 und Innenrohr 1 entstehen kann.

Die Erfindung ist auch anwendbar für Leitungen, bei denen zwischen Innenrohr 1 und Außenrohr 2 kein direkter Schaum vorhanden ist, sondern z.B. ein Isoliergas, wie es häufig bei Rollenlieferungen verwendet wird. Statt des Isoliergases kann auch ein Gas-Schaumgemisch verwendet werden.

**Patentansprüche**

1. Verfahren zum Herstellen eines temperaturisolierten Leitungsrohres mit einem oder mehreren Innenrohren (1), einem Außenrohr (2) und einem durch diese gebildeten Ringraum (6), der mit einem Schaumstoff (5) ausgefüllt ist, insbesondere für eine Nachisolierung an einer Stoß- oder Reparaturstelle, dadurch gekennzeichnet, daß zunächst der Ringraum (6) evakuiert und anschließend das den Schaumstoff (5) erzeugende Schäummittel in den Ringraum (6) eingebracht wird.

2. Verfahren nach Anspruch 1, dadurch gekennzeichnet, daß ein pulsierendes Vakuum erzeugt wird, indem mehrfach zeitlich nacheinander der Luftdruck in dem Ringraum (6) langsam durch Luftabsaugen von Normaldruck auf Minimaldruck verringert und schnell durch erneute Luftzufuhr von Minimaldruck auf Normaldruck erhöht wird.

3. Verfahren nach Anspruch 1, dadurch gekennzeichnet, daß das Gesamt-Gasvolumen beim Gasabsaugen oder bei der Gaszufuhr gemessen wird und als Maß für das Volumen des zum anschließenden Ausschäumen benötigten Schäummittels dient.

4. Verfahren nach Anspruch 1, dadurch gekennzeichnet, daß in das Vakuum des Ringraumes (6) eine das Zerstäuben im Vakuum begünstigende Chemikalie, insbesondere Frigen, eingebracht wird, die an der Reaktion des Schäummittels selbst nicht teilnimmt und spätestens während der Zerstäubung zu Gas wird, so daß eine feinere Verteilung bzw. Vermischung erreicht wird.

5. Einrichtung zum Durchführen des Verfahrens nach Anspruch 1, gekennzeichnet durch einen zylinderförmigen Ventil- und Düsenkopf (17), der an einem ersten Ende zum luftdichten Einsetzen in die Wand des Außenrohres (2) und an einem zweiten Ende zum Anschluß der Leitungen (9, 10, 12) für das Evakuieren und die Zufuhr des Schäummittels ausgebildet ist.

6. Einrichtung nach Anspruch 5, dadurch gekennzeichnet, daß der Ventil- und Düsenkopf (17) ein sich zum zweiten Ende hin konisch erweiterndes Teil (35) aufweist, das an einer Bohrung innerhalb des Außenrohres (2) verspannbar ist (Fig. 3).

7. Einrichtung nach Anspruch 5, dadurch gekennzeichnet, daß der Düsenkopf (17) mit einer das Außenrohr (2) umgebenden, spannbandartigen Schelle (34) an dem Außenrohr (2) oder der Muffe (3) gehaltert ist (Fig. 10).

8. Einrichtung nach Anspruch 5, dadurch gekennzeichnet, daß das Außenrohr (2) oder eine Muffe (3) im Bereich des evakuierten Füllraumes (6) zur Verringerung der Beanspruchung durch den äußeren Luftdruck luftdicht von einer hülsenförmigen Kappe (47) umgeben wird, durch deren Wandung die Evakuierung und die Einbringung des Schäummittels erfolgen.

9. Einrichtung nach einem der Ansprüche 5 bis 8, dadurch gekennzeichnet, daß die zum Austritt des Schäummittels dienenden Düsen (32) abnehmbare Endstücke erhalten, um jeweils saubere Düsen und damit definierte Mischungsverhältnisse und Sicherheit gegen zurückströmenden Schaum zu garantieren (Fig. 8).

10. Anwendung des Verfahrens nach Anspruch 1 zum nachträglichen Herstellen des Schaumstoffes (5) und des Außenrohres (2) bei einer Verbindungsstelle zwischen zwei Rohrleitungen oder einer Reparaturstelle.

**Claims**

1. Method of manufacturing a thermally-insulated pipeline with one or more inner pipes (1), an outer pipe (2) and an annular space (6) formed by these pipes and filled with a foam (5), in particular for the subsequent insulation of a repair point or joint, characterised in that the annular space (6) is first evacuated and the foaming agent producing the foam (5) is then introduced into the annular space (6).

2. Method according to Claim 1, characterised in that a pulsating vacuum is generated by a plurality of successive steps in which the air pressure in the annular space (6) is reduced slowly from standard pressure to minimum pressure by air extraction and increased rapidly from minimum pressure to standard pressure by renewed air supply.

3. Method according to Claim 1, characterised in that the total gas volume is measured during gas extraction or during gas supply and is used as a criterion for the volume of the foaming agent required for the subsequent foam-filling.

4. Method according to Claim 1, characterised in that there is introduced into the vacuum of the annular space (6) a chemical, in particular Freon 12, promoting the atomization in the vacuum, which does not itself participate in the reaction of the foaming agent and becomes a gas no later than during the atomization, so that a finer division and intermingling is achieved.

5. Apparatus for carrying out the method according to Claim 1, characterised by a cylindrical valve and nozzle head (17) which at a first end is designed for air-tight insertion into the wall of the outer pipe (2) and at a second end is designed for the connection of the lines (9, 10, 12) for the evacuation and the supply of the foaming agent.

6. Apparatus according to Claim 5, characterised in that the valve and nozzle head (17) comprises a part (35) expanding conically towards the second end, said part (35) being clampable on a drill hole inside the outer pipe (2) (Fig. 3).

7. Apparatus according to Claim 5, characterised in that the nozzle head (17) is supported on the outer pipe (2) or the sleeve (3) by a tension-band-type collar (34) surrounding the outer pipe (2).

8. Apparatus according to Claim 5, characterised in that the outer pipe (2) or a sleeve (3) in the vicinity of the evacuated filling space (6) is, in order to reduce the load exerted by the outer air pressure, surrounded air-tight by a shell-shaped cap (47) through the wall of which the evacuation and the introduction of the foaming agent take place.

9. Apparatus according to any one of claims 5 to 8, characterised in that the nozzles (32) serving as outlets for the foaming agent contain removable end-pieces, in order to guarantee clean nozzles at any time and hence specified mixing ratios and protection against foam flowing in a reverse direction (Fig. 8).

10. Application of the method according to Claim 1 for the subsequent manufacture of the foam (5) and the outer pipe (2) at a connection point between two pipelines or a repair point.

## Revendications

1. Procédé pour réaliser une conduite calorifugée comprenant un ou plusieurs tubes intérieurs (1), un tube extérieur (2) et un espace annulaire (6) délimité entre eux et rempli d'une matière cellulaire ou mousse (5), le procédé étant applicable en particulier à la post-isolation d'un joint ou d'un endroit réparé de la conduite, caractérisé en ce que l'on crée d'abord le vide dans l'espace annulaire (6) et on introduit ensuite dans cet espace (6) le produit générateur de mousse (5).

2. Procédé selon la revendication 1, caractérisé en ce que l'on crée un vide pulsé en réduisant lentement, plusieurs fois de suite, la pression d'air dans l'espace annulaire (6) par aspiration de l'air de cet espace, de la pression normale à une pression minimale, puis en augmentant rapidement la pression par une amenée d'air de la pression minimale à la pression normale.

3. Procédé selon la revendication 1, caractérisé en ce que l'on mesure le volume de gaz total, lors de l'aspiration ou de l'amenée de gaz, et on utilise la valeur ainsi mesurée pour déterminer le volume du produit générateur de mousse nécessaire ensuite au remplissage de l'espace annulaire avec de la mousse.

4. Procédé selon la revendication 1, caractérisé en ce que l'on introduit dans l'espace annulaire (6), mis sous vide, un produit chimique, notamment du fréon, qui favorise la vaporisation dans le vide, produit chimique qui ne participe pas lui-même à la réaction du produit générateur de mousse et se transforme en gaz au plus tard pendant la vaporisation, de sorte qu'on obtient une distribution plus fine ou un mélange plus homogène.

5. Dispositif pour la mise en œuvre du procédé selon la revendication 1, caractérisé par une tête (17) à robinets et buses, de forme cylindrique, qui est conformée à une première extrémité pour le montage étanche à l'air dans la paroi du tube extérieur (2) et à une seconde extrémité pour le raccordement des tuyaux (9, 10, 12) servant à la mise sous vide et à l'amenée du produit générateur de mousse.

6. Dispositif selon la revendication 5, caractérisé en ce que la tête (17) comporte une partie (35) s'élargissant coniquement vers la seconde extrémité et pouvant être serrée à l'intérieur du tube extérieur (2) dont elle traverse un perçage (figure 3).

7. Dispositif selon la revendication 5, caractérisé en ce que la tête (17) est fixée sur le tube extérieur (2) ou sur le manchon (3) au moyen d'une ceinture (34) semblable à un collier de serrage et entourant le tube extérieur (2) (figure 10).

8. Dispositif selon la revendication 5, caractérisé en ce que le tube extérieur (2) ou un manchon (3) est entouré, de façon étanche à l'air, dans la zone de l'espace (6) dans lequel doit être fait le vide et qui est à remplir ensuite de mousse, par une enveloppe tubulaire (47) servant à réduire la sollicitation de la conduite par la pression d'air extérieure, la création du vide et l'introduction du produit générateur de mousse s'opérant à travers la paroi de cette enveloppe.

9. Dispositif selon une des revendications 5 à 8, caractérisé en ce que les buses (32), par lesquelles doit sortir le produit générateur de mousse, comportent des embouts amovibles servant à préserver la propreté des buses et à maintenir ainsi des rapports de mélange définis, ainsi que comme sécurité contre le reflux de la mousse (figure 8).

10. Application du procédé selon la revendication 1 pour former ultérieurement la matière cellulaire ou mousse (5) et le tube extérieur (2) sur un joint entre deux tronçons de conduite ou sur un endroit réparé de la conduite.

Luft 9 10 Schaumstoff

Fig.1

EP 0 217 343 B1

Fig.2

Fig.3

Fig. 4

Fig. 5

Fig.6

Fig.7

Schnitt A–A

Fig. 8

Fig. 9

Fig. 10

Fig.11

Gasaustritt

Fig.12

EP 0 217 343 B1

**Fig.13**

**Fig.14**

**Fig.15**

**Fig.16**

**Fig.17**